(19) Europäisches Patentamt
European Patent Office
Office européen des brevets

(11) EP 2 585 499 B1

(12) EUROPEAN PATENT SPECIFICATION

(45) Date of publication and mention of the grant of the patent:
**27.02.2019 Bulletin 2019/09**

(21) Application number: **11723083.9**

(22) Date of filing: **06.06.2011**

(51) Int Cl.:
***C08F 110/06*** (2006.01) ***C08F 4/651*** (2006.01)
***C08F 4/649*** (2006.01) ***C08F 10/06*** (2006.01)

(86) International application number:
**PCT/EP2011/059267**

(87) International publication number:
**WO 2011/160936 (29.12.2011 Gazette 2011/52)**

# (54) CATALYST SYSTEM FOR THE POLYMERIZATION OF OLEFINS

KATALYSATORSYSTEM ZUR POLYMERISIERUNG VON OLEFINEN

SYSTÈME CATALYTIQUE POUR LA POLYMÉRISATION D'OLÉFINES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **29.06.2010 US 398654 P**
**24.06.2010 EP 10167165**

(43) Date of publication of application:
**01.05.2013 Bulletin 2013/18**

(73) Proprietor: **Basell Poliolefine Italia S.r.l.**
**20121 Milano (IT)**

(72) Inventors:
- **FUSHIMI, Masaki**
**65760 Eschborn (DE)**
- **GUIDOTTI, Simona**
**I-40121 Bologna (IT)**
- **KRISTEN, Marc Oliver**
**45721 Haltern (DE)**
- **MIGNOGNA, Alessandro**
**I-40121 Bologna (IT)**
- **MORINI, Giampiero**
**I-35100 Padova (IT)**
- **PATER, Jochem T. M.**
**I-44020 Ferrara (IT)**

(74) Representative: **Giberti, Stefano**
**c/o Basell Polioefine Italia s.r.l.**
**Intellectual property dept.**
**P.le Donegani 12**
**44122 Ferrara (IT)**

(56) References cited:
**WO-A1-00/63261 WO-A1-2009/085649**

EP 2 585 499 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to a catalyst system capable to show, in propylene polymerization, high activity, stereospecificity and increased hydrogen response.

Catalyst systems for the stereospecific polymerization of olefins are widely known in the art. The most common type of catalyst system belongs to the Ziegler-Natta family and comprises a solid catalyst component, constituted by a magnesium dihalide on which are supported a titanium compound and an internal electron donor compound, used in combination with an Al-alkyl compound. Conventionally however, when a higher crystallinity of the polymer is required, also an external donor, usually an alkylalkoxysilane, is needed in order to obtain higher isotacticity. In fact, when an external donor is absent, the isotactic index of the resulting polymer is not sufficiently high even if a 1,3-diether is used as internal donor.

In certain applications, particularly in thin wall injection molding (TWIM) it is necessary to use polymers with relatively high fluidity i.e., with a relatively lower molecular weight in order to have high quality moldings.

The low molecular weight polymers are commonly obtained by increasing the content of the chain transfer agent (molecular weight regulator) in particular hydrogen which is commonly used industrially.

In the case of TWIM applications both high cristallinity and low molecular weight is required, and therefore the catalyst system has to incorporate also an external donor. However, the use of the most common external donors like alkylalkoxysilane leads to a worsening of the hydrogen response, i.e., to the capability of producing increasingly short polymer chain in respect of incremental hydrogen concentration.

This means that it is necessary to increase the hydrogen content in the polymerization mixture thereby increasing the pressure of the reaction system which in turn would make necessary the use of equipments especially designed to withstand to higher pressure and thus being more expensive. A possible solution, particularly for liquid-phase polymerization, would be to run the plant at a lower temperature which can allow a reduced pressure, but this negatively impacts the efficiency of heat exchange and the relative plant productivity. Therefore, it would be necessary to have a catalyst system showing an improved hydrogen response, i.e., capability of producing polymers with a lower molecular weight in the presence of small amounts of hydrogen.

Examples of catalysts having high hydrogen response are the Ziegler-Natta catalysts containing 1,3-diethers described for example in EP622380. Such catalysts components are generally able to produce propylene polymers with high melt flow rates. When an external donor of the alkylalkoxysilane type is added in order to increase its stereospecificity, the hydrogen response of the catalyst is lowered.

The applicant has found that the selection of a specific type of catalyst system is able to solve the aforementioned problem. It is therefore an object of the present invention a catalyst system comprising the product obtained by contacting (a) a solid catalyst component containing Mg, Ti, halogen and at least an electron donor compound selected from 1,3-diethers;

(b) an alkylaluminum cocatalyst; and

(c) an ester of formula $ROOC-(CH_2)_n-COOR$ in which n is an integer from 2 to 8 and the R groups, equal to or different from each other, are C1-C10 alkyl groups.

Preferably, the solid catalyst component comprises Mg, Ti, halogen and an electron donor selected from 1,3-diethers of formula (I):

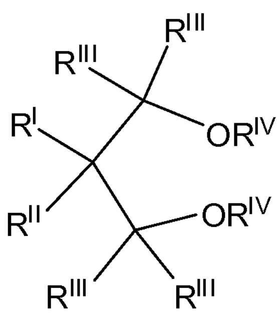
(I)

where $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

In the electron donor of formula (I) preferably, $R^{IV}$ is a 1-6 carbon atom alkyl radical and more particularly a

methyl while the $R^{III}$ radicals are preferably hydrogen. Moreover, when $R^{I}$ is methyl, ethyl, propyl, or isopropyl, $R^{II}$ can be ethyl, propyl, isopropyl, butyl, isobutyl, tert-butyl, isopentyl, 2-ethylhexyl, cyclopentyl, cyclohexyl, methylcyclohexyl, phenyl or benzyl; when $R^{I}$ is hydrogen, $R^{II}$ can be ethyl, butyl, sec-butyl, tert-butyl, 2-ethylhexyl, cyclohexylethyl, diphenylmethyl, p-chlorophenyl, 1-naphthyl, 1-decahydronaphthyl; $R^{I}$ and $R^{II}$ can also be the same and can be ethyl, propyl, isopropyl, butyl, isobutyl, tert-butyl, neopentyl, phenyl, benzyl, cyclohexyl, cyclopentyl.

Specific examples of ethers that can be advantageously used include: 2-(2-ethylhexyl)1,3-dimethoxypropane, 2-isopropyl-1,3-dimethoxypropane, 2-butyl-1,3-dimethoxypropane, 2-sec-butyl-1,3-dimethoxypropane, 2-cyclohexyl-1,3-dimethoxypropane, 2-phenyl-1,3-dimethoxypropane, 2-tert-butyl-1,3-dimethoxypropane, 2-cumyl-1,3-dimethoxypropane, 2-(2-phenylethyl)-1,3-dimethoxypropane, 2-(2-cyclohexylethyl)-1,3-dimethoxypropane, 2-(p-chlorophenyl)-1,3-dimethoxypropane, 2-(diphenylmethyl)-1,3-dimethoxypropane, 2(1-naphthyl)-1,3-dimethoxypropane, 2(p-fluorophenyl)-1,3-dimethoxypropane, 2(1-decahydronaphthyl)-1,3-dimethoxypropane, 2(p-tert-butylphenyl)-1,3-dimethoxypropane, 2,2-dicyclohexyl-1,3-dimethoxypropane, 2,2-diethyl-1,3-dimethoxypropane, 2,2-dipropyl-1,3-dimethoxypropane, 2,2-dibutyl-1,3-dimethoxypropane, 2,2-diethyl-1,3-diethoxypropane, 2,2-dicyclopentyl-1,3-dimethoxypropane, 2,2-dipropyl-1,3-diethoxypropane, 2,2-dibutyl-1,3-diethoxypropane, 2-methyl-2-ethyl-1,3-dimethoxypropane, 2-methyl-2-propyl-1,3-dimethoxypropane, 2-methyl-2-benzyl-1,3-dimethoxypropane, 2-methyl-2-phenyl-1,3-dimethoxypropane, 2-methyl-2-cyclohexyl-1,3-dimethoxypropane, 2-methyl-2-methylcyclohexyl-1,3-dimethoxypropane, 2,2-bis(p-chlorophenyl)-1,3-dimethoxypropane, 2,2-bis(2-phenylethyl)-1,3-dimethoxypropane, 2,2-bis(2-cyclohexylethyl)-1,3-dimethoxypropane, 2-methyl-2-isobutyl-1,3-dimethoxypropane, 2-methyl-2-(2-ethylhexyl)-1,3-dimethoxypropane, 2,2-bis(2-ethylhexyl)-1,3-dimethoxypropane, 2,2-bis(p-methylphenyl)-1,3-dimethoxypropane, 2-methyl-2-isopropyl-1,3-dimethoxypropane, 2,2-diisobutyl-1,3-dimethoxypropane, 2,2-diphenyl-1,3-dimethoxypropane, 2,2-dibenzyl-1,3-dimethoxypropane, 2-isopropyl-2-cyclopentyl-1,3-dimethoxypropane, 2,2-bis(cyclohexylmethyl)-1,3-dimethoxypropane, 2,2-diisobutyl-1,3-diethoxypropane, 2,2-diisobutyl-1,3-dibutoxypropane, 2-isobutyl-2-isopropyl-1,3-dimetoxypropane, 2,2-di-sec-butyl-1,3-dimetoxypropane, 2,2-di-tert-butyl-1,3-dimethoxypropane, 2,2-dineopentyl-1,3-dimethoxypropane, 2-iso-propyl-2-isopentyl-1,3-dimethoxypropane, 2-phenyl-2-benzyl-1,3-dimetoxypropane, 2-cyclohexyl-2-cyclohexylmethyl-1,3-dimethoxypropane.

Furthermore, particularly preferred are the 1,3-diethers of formula (II)

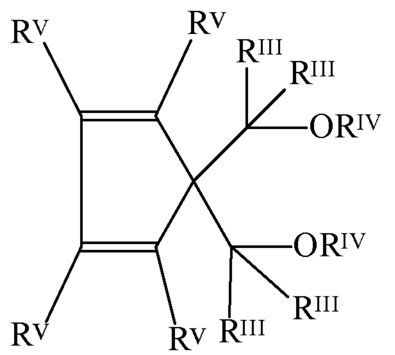

(II)

where the radicals $R^{IV}$ have the same meaning explained above and the radicals $R^{III}$ and $R^{V}$, equal or different to each other, are selected from the group consisting of hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ arylalkyl radicals and two or more of the $R^{V}$ radicals can be bonded to each other to form condensed cyclic structures, saturated or unsaturated, optionally substituted with $R^{VI}$ radicals selected from the group consisting of halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ arylalkyl radicals; said radicals $R^{V}$ and $R^{VI}$ optionally containing one or more heteroatoms as substitutes for carbon or hydrogen atoms, or both.

Preferably, in the 1,3-diethers of formulae (I) and (II) all the $R^{III}$ radicals are hydrogen, and all the $R^{IV}$ radicals are methyl. Moreover, are particularly preferred the 1,3-diethers of formula (II) in which two or more of the $R^{V}$ radicals are bonded to each other to form one or more condensed cyclic structures, preferably benzenic, optionally substituted by $R^{VI}$ radicals. Specially preferred are the compounds of formula (III):

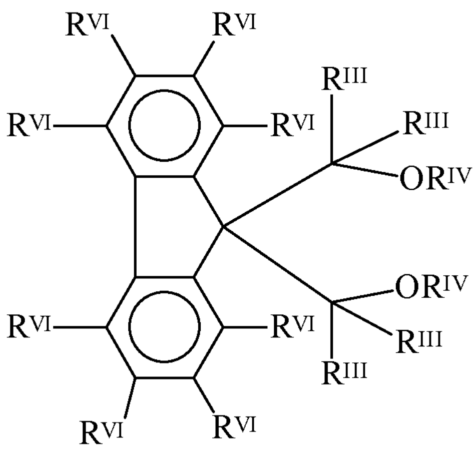

(III)

where the $R^{VI}$ radicals equal or different are hydrogen; halogens, preferably Cl and F; $C_1$-$C_{20}$ alkyl radicals, linear or branched; $C_3$-$C_{20}$ cycloalkyl, $C_6$-$C_{20}$ aryl, $C_7$-$C_{20}$ alkylaryl and $C_7$-$C_{20}$ arylalkyl radicals, optionally containing one or more heteroatoms selected from the group consisting of N, 0, S, P, Si and halogens, in particular Cl and F, as substitutes for carbon or hydrogen atoms, or both; the radicals $R^{III}$ and $R^{IV}$ are as defined above for formula (II).

Specific examples of compounds comprised in formulae (I) and (II) are:

1,1-bis(methoxymethyl)-cyclopentadiene;
1,1 -bis(methoxymethyl)-2,3,4,5 -tetramethylcyclopentadiene;
1,1-bis(methoxymethyl)-2,3,4,5-tetraphenylcyclopentadiene;
1,1-bis(methoxymethyl)-2,3,4,5-tetrafluorocyclopentadiene;
1,1-bis(methoxymethyl)-3,4-dicyclopentylcyclopentadiene;
1,1-bis(methoxymethyl)indene; 1,1-bis(methoxymethyl)-2,3-dimethylindene;
1,1-bis(methoxymethyl)-4,5,6,7-tetrahydroindene;
1,1-bis(methoxymethyl)-2,3,6,7-tetrafluoroindene;
1,1-bis(methoxymethyl)-4,7-dimethylindene;
1,1-bis(methoxymethyl)-3,6-dimethylindene;
1,1-bis(methoxymethyl)-4-phenylindene;
1,1-bis(methoxymethyl)-4-phenyl-2-methylindene;
1,1-bis(methoxymethyl)-4-cyclohexylindene;
1,1-bis(methoxymethyl)-7-(3,3,3-trifluoropropyl)indene;
1,1-bis(methoxymethyl)-7-trimethyilsilylindene;
1,1-bis(methoxymethyl)-7-trifluoromethylindene;
1,1-bis(methoxymethyl)-4,7-dimethyl-4,5,6,7-tetrahydroindene;
1,1-bis(methoxymethyl)-7-methylindene;
1,1-bis(methoxymethyl)-7-cyclopentylindene;
1,1-bis(methoxymethyl)-7-isopropylindene;
1,1-bis(methoxymethyl)-7-cyclohexylindene;
1,1-bis(methoxymethyl)-7-tert-butylindene;
1,1-bis(methoxymethyl)-7-tert-butyl-2-methylindene;
1,1-bis(methoxymethyl)-7-phenylindene;
1,1-bis(methoxymethyl)-2-phenylindene;
1,1-bis(methoxymethyl)-1H-benz[e]indene;
1,1-bis(methoxymethyl)-1H-2-methylbenz[e]indene;
9,9-bis(methoxymethyl)fluorene;
9,9-bis(methoxymethyl)-2,3,6,7-tetramethylfluorene;
9,9-bis(methoxymethyl)-2,3,4,5,6,7-hexafluorofluorene;
9,9-bis(methoxymethyl)-2,3-benzofluorene;
9,9-bis(methoxymethyl)-2,3,6,7-dibenzofluorene;

9,9-bis(methoxymethyl)-2,7-diisopropylfluorene;
9,9-bis(methoxymethyl)-1,8-dichlorofluorene;
9,9-bis(methoxymethyl)-2,7-dicyclopentylfluorene;
9,9-bis(methoxymethyl)-1,8-difluorofluorene;
9,9-bis(methoxymethyl)-1,2,3,4-tetrahydrofluorene;
9,9-bis(methoxymethyl)-1,2,3,4,5,6,7,8-octahydrofluorene;
9,9-bis(methoxymethyl)-4-tert-butylfluorene.

In addition to the 1,-3 diethers above described the solid catalyst component (a) can also contain additional electron donors belonging to ethers, esters of aromatic or aliphatic mono or dicarboxylic acids, ketones, or alkoxyesters. Among them particularly preferred are the esters of succinic acids according to formula (I) of EP1088009.

The additional donors may be present in an amount such that the 1,3-diether/other donor molar ratio ranges from 0.1 to 10 preferably from 0.2 to 8.

As explained above, the catalyst components of the invention comprise, in addition to the above electron donors, Ti, Mg and halogen. In particular, the catalyst components comprise a titanium compound, having at least a Ti-halogen bond and the above mentioned electron donor compounds supported on a Mg halide. The magnesium halide is preferably $MgCl_2$ in active form which is widely known from the patent literature as a support for Ziegler-Natta catalysts. Patents USP 4,298,718 and USP 4,495,338 were the first to describe the use of these compounds in Ziegler-Natta catalysis. It is known from these patents that the magnesium dihalides in active form used as support or co-support in components of catalysts for the polymerization of olefins are characterized by X-ray spectra in which the most intense diffraction line that appears in the spectrum of the non-active halide is diminished in intensity and is replaced by a halo whose maximum intensity is displaced towards lower angles relative to that of the more intense line.

The preferred titanium compounds used in the catalyst component of the present invention are $TiCl_4$ and $TiCl_3$; furthermore, also Ti-haloalcoholates of formula $Ti(OR)_{n-y}X_y$ can be used, where n is the valence of titanium, y is a number between 1 and n-1, X is halogen and R is a hydrocarbon radical having from 1 to 10 carbon atoms.

The preparation of the solid catalyst component can be carried out according to several methods. According to one of these methods, the magnesium dichloride in an anhydrous state, the titanium compound and the electron donor compounds are milled together under conditions in which activation of the magnesium dichloride occurs. The so obtained product can be treated one or more times with an excess of $TiCl_4$ at a temperature between 80 and 135°C. This treatment is followed by washings with hydrocarbon solvents until chloride ions have disappeared. According to a further method, the product obtained by co-milling the magnesium chloride in an anhydrous state, the titanium compound and the electron donor compounds are treated with halogenated hydrocarbons such as 1,2-dichloroethane, chlorobenzene, dichloromethane etc. The treatment is carried out for a time between 1 and 4 hours and at temperature of from 40°C to the boiling point of the halogenated hydrocarbon. The product obtained is then generally washed with inert hydrocarbon solvents such as hexane.

According to another method, magnesium dichloride is preactivated according to well known methods and then treated with an excess of $TiCl_4$ at a temperature of about 80 to 135°C in the presence of the electron donor compounds. The treatment with $TiCl_4$ is repeated and the solid is washed with hexane in order to eliminate any non-reacted $TiCl_4$. A further method described in WO2005/095472 comprises reacting, in the presence of a 1,3-diether, a titanium compound having at least Ti-Cl bond with a precursor of formula $MgCl_n(OR)_{2-n}LB_p$ in which n is from 0.1 to 1.9, p is higher than 0.4, and R is a C1-C15 hydrocarbon group. Preferably, the reaction is carried out in and an excess of $TiCl_4$ at a temperature of about 80 to 120°C.

According to a preferred method, the solid catalyst component can be prepared by reacting a titanium compound of formula $Ti(OR)_{n-y}X_y$, where n is the valence of titanium and y is a number between 1 and n, preferably $TiCl_4$, with a magnesium chloride deriving from an adduct of formula $MgCl_2pROH$, where p is a number between 0.1 and 6, preferably from 2 to 3.5, and R is a hydrocarbon radical having 1-18 carbon atoms. The adduct can be suitably prepared in spherical form by mixing alcohol and magnesium chloride in the presence of an inert hydrocarbon immiscible with the adduct, operating under stirring conditions at the melting temperature of the adduct (100-130°C). Then, the emulsion is quickly quenched, thereby causing the solidification of the adduct in form of spherical particles. Examples of spherical adducts prepared according to this procedure are described in USP 4,399,054 and USP 4,469,648. The so obtained adduct can be directly reacted with Ti compound or it can be previously subjected to thermal controlled dealcoholation (80-130°C) so as to obtain an adduct in which the number of moles of alcohol is generally lower than 3 preferably between 0.1 and 2.5. The reaction with the Ti compound can be carried out by suspending the adduct (dealcoholated or as such) in cold $TiCl_4$ (generally 0°C); the mixture is heated up to 80-130°C and kept at this temperature for 0.5-2 hours. The treatment with $TiCl_4$ can be carried out one or more times. The electron donor compounds can be added during the treatment with $TiCl_4$. They can be added together in the same treatment with $TiCl_4$ or separately in two or more treatments.

The preparation of catalyst components in spherical form are described for example in European Patent Applications EP-A-395083, EP-A-553805, EP-A-553806, EPA601525 and WO98/44001.

The solid catalyst components obtained according to the above method show a surface area (by B.E.T. method) generally between 20 and 500 $m^2/g$ and preferably between 50 and 400 $m^2/g$, and a total porosity (by B.E.T. method) higher than 0.2 $cm^3/g$ preferably between 0.2 and 0.6 $cm^3/g$. The porosity (Hg method) due to pores with radius up to 10.000Å generally ranges from 0.3 to 1.5 $cm^3/g$, preferably from 0.45 to 1 $cm^3/g$.

The solid catalyst component has an average particle size ranging from 5 to 120 μm and more preferably from 10 to 100 μm.

The alkyl-Al compound (b) is preferably selected from the trialkyl aluminum compounds such as for example triethylaluminum, triisobutylaluminum, tri-n-butylaluminum, tri-n-hexylaluminum, tri-n-octylaluminum. It is also possible to use mixtures of trialkylaluminum's with alkylaluminum halides, alkylaluminum hydrides or alkylaluminum sesquichlorides such as $AlEt_2Cl$ and $Al_2Et_3Cl_3$. The ester (c) is used as external electron donor and is preferably selected from the compounds in which R is a C1-C6 linear or branched alkyl, preferably ethyl or isobutyl.

In the esters (c) n is preferably from 2 to 7, more preferably from 4 to 6 and especially from 4 to 5.

Non limitative examples of esters (c) are diethyl succinate, diethyl glutarate, diethyl adipate, diethyl suberate, diethyl pimelate and the corresponding esters deriving from substitution of ethyl with methyl, isobutyl, or 2-ethylhexyl.

The catalyst of the invention is able to polymerize any kind of $CH_2$=CHR olefins in which R is hydrogen or a C1-C10 hydrocarbon group or mixtures of such olefins. However, as mentioned above, it is particularly suited for the preparation of propylene polymers due to the fact that it shows increased hydrogen response with respect to the most common used alkylalkoxysilane, while maintaining high stereospecificity expressed by a percentage of xylene insolubility at 25°C generally of 97% or higher. The Molecular Weight Distribution (expressed as polydispersity index determined as described hereinafter) remains narrow, generally lower than 4 and preferably lower than or equal to 3.5. Another important advantage is that hydrogen response and high stereospecificity are retained while maintaining a very good level of polymerization activity.

Any kind of polymerization process can be used with the catalysts of the invention that are very versatile. The polymerization can be carried out for example in slurry using as diluent a liquid inert hydrocarbon, or in bulk using the liquid monomer (propylene) as a reaction medium, or in solution using either monomers or inert hydrocarbons as solvent for the nascent polymer. Moreover, it is possible to carry out the polymerization process in gas-phase operating in one or more fluidized or mechanically agitated bed reactors.

The process of the present invention is particularly advantageous for producing said isotactic propylene polymers with high fluidity in liquid phase because in such a type of process the pressure problems connected to the use of increased amounts of hydrogen is more evident. As mentioned, the liquid phase process can be either in slurry, solution or bulk (liquid monomer). This latter technology is the most preferred and can be carried out in various types of reactors such as continuous stirred tank reactors, loop reactors or plug-flow ones. The polymerization is generally carried out at temperature of from 20 to 120°C, preferably of from 40 to 85°C. When the polymerization is carried out in gas-phase the operating pressure is generally between 0.5 and 10 MPa, preferably between 1 and 5 MPa. In the bulk polymerization the operating pressure is generally between 1 and 6 MPa preferably between 1.5 and 4 MPa.

The catalyst of the present invention can be used as such in the polymerization process by introducing it directly into the reactor. In the alternative, the catalyst can be pre-polymerized before being introduced into the first polymerization reactor. The term pre-polymerized, as used in the art, means a catalyst which has been subject to a polymerization step at a low conversion degree. According to the present invention a catalyst is considered to be pre-polymerized when the amount the polymer produced is from about 0.1 up to about 1000 g per gram of solid catalyst component.

The pre-polymerization can be carried out with the α-olefins selected from the same group of olefins disclosed before. In particular, it is especially preferred pre-polymerizing ethylene or mixtures thereof with one or more α-olefins in an amount up to 20% by mole. Preferably, the conversion of the pre-polymerized catalyst component is from about 0.2 g up to about 500 g per gram of solid catalyst component.

The pre-polymerization step can be carried out at temperatures from 0 to 80°C preferably from 5 to 50°C in liquid or gas-phase. The pre-polymerization step can be performed in-line as a part of a continuous polymerization process or separately in a batch process. The batch pre-polymerization of the catalyst of the invention with ethylene in order to produce an amount of polymer ranging from 0.5 to 20 g per gram of catalyst component is particularly preferred.

The following examples are given in order to better illustrate the invention without limiting it.

## CHARACTERIZATION

### Determination of X.I.

2.5 g of polymer and 250 ml of o-xylene were placed in a round-bottomed flask provided with a cooler and a reflux condenser and kept under nitrogen. The obtained mixture was heated to 135°C and was kept under stirring for about 60 minutes. The final solution was allowed to cool to 25°C under continuous stirring, and the insoluble polymer was then filtered. The filtrate was then evaporated in a nitrogen flow at 140°C to reach a constant weight. The content

of said xylene-soluble fraction is expressed as a percentage of the original 2.5 grams and then, by difference, the X.I. %.

**Melt flow rate (MFR)**

Determined according to ISO 1133 (230°C, 2.16 Kg)

**Polydispersity Index (P.I.)**

Determined at a temperature of 200 °C by using a parallel plates rheometer model RMS-800 marketed by RHEOMETRICS (USA), operating at an oscillation frequency which increases from 0.1 rad/sec to 100 rad/sec. The value of the polydispersity index is derived from the crossover modulus by way of the equation:

$$P.I.= 10^5/Gc$$

in which Gc is the crossover modulus defined as the value (expressed in Pa) at which G'=G" wherein G' is the storage modulus and G" is the loss modulus.

## EXAMPLES

**General procedure for preparation of the spherical adduct**

An initial amount of microspheroidal $MgCl_2 \cdot 2.8C_2H_5OH$ was prepared according to the method described in ex.2 of WO98/44009 but operating on larger scale. The solid adduct so obtained were then subject to thermal dealcoholation at increasing temperatures from 30 to 130°C and operating in nitrogen current until reaching an alcohol content of 2.1 moles per mol of $MgCl_2$.

**General procedure A for the preparation of the solid catalyst component (Examples 1-17, Comp. 1-3)**

Into a 500 ml round bottom flask, equipped with mechanical stirrer, cooler and thermometer 250 ml of $TiCl_4$ were introduced at room temperature under nitrogen atmosphere. After cooling to 0°C, while stirring, the internal donor 9,9-bis(methoxymethyl)fluorene and 10.0 g of microspheroidal $MgCl_2 \cdot 2.1C_2H_5OH$ (prepared as described above) were sequentially added into the flask. The amount of 9,9-bis(methoxymethyl)fluorene was specifically charged in order to have a Mg/donor molar ratio of 6. The temperature was raised to 100°C and maintained for 1 hour. Thereafter, stirring was stopped, the solid product was allowed to settle and the supernatant liquid was siphoned off maintaining the temperature at 100°C. After the supernatant was removed, additional 250 ml of fresh $TiCl_4$ were added. The mixture was then heated at 110°C and kept at this temperature for 60 minutes. Once again the stirring was interrupted; the solid product was allowed to settle and the supernatant liquid was siphoned off maintaining the temperature at 110°C. A third aliquot of fresh $TiCl_4$ (250 ml) was added, the mixture was maintained under agitation at 110°C for 30 minutes and then the supernatant liquid was siphoned off. The solid was washed with anhydrous hexane six times (6 x 100 ml) in temperature gradient down to 60°C and one time (100 ml) at room temperature. The solid was finally dried under vacuum and analyzed. The amount of Ti bonded on the catalyst resulted in 3.9%wt., while the amount of internal donor bonded resulted in 12%wt.

**General procedure B for the preparation of the solid catalyst component (Examples 18-21, Comp. 4)**

Into a 500 ml round bottom flask, equipped with mechanical stirrer, cooler and thermometer 250 ml of $TiCl_4$ were introduced at room temperature under nitrogen atmosphere. After cooling to 0°C, while stirring, the internal donors 9,9-bis(methoxymethyl)fluorene and diethyl 2,3-diisopropylsuccinate and 10.0 g of microspheroidal $MgCl_2 \cdot 2.1C_2H_5OH$ (prepared as described above) were sequentially added into the flask. The amount of 9,9-bis(methoxymethyl)fluorene and diethyl 2,3-diisopropylsuccinate were specifically charged in order to have a Mg/total donor molar ratio of 8. The temperature was raised to 100°C and maintained for 1 hour. Thereafter, stirring was stopped, the solid product was allowed to settle and the supernatant liquid was siphoned off maintaining the temperature at 100°C. After the supernatant was removed, additional 250 ml of fresh $TiCl_4$ were added. The mixture was then heated at 110°C and kept at this temperature for 60 minutes. Once again the stirring was interrupted; the solid product was allowed to settle and the supernatant liquid was siphoned off maintaining the temperature at 110°C. A third aliquot of fresh $TiCl_4$ (250 ml) was added, the mixture was maintained under agitation at 110°C for 30 minutes and then the supernatant liquid was siphoned off. The solid was washed with anhydrous hexane six times (6 x 100 ml) in temperature gradient down to 60°C and one

time (100 ml) at room temperature. The solid was finally dried under vacuum and analyzed. The amount of Ti bonded on the catalyst resulted in 3.7%wt., while the amount of internal donors bonded resulted in 2.8%wt. for 9,9-bis(methoxymethyl)fluorene and 8.7%wt. for diethyl 2,3-diisopropylsuccinate.

**Examples 1-21 and comparative examples 1-4**

A 4-litre steel autoclave equipped with a stirrer, pressure gauge, thermometer, catalyst feeding system, monomer feeding lines and thermostating jacket, was purged with nitrogen flow at 70°C for one hour. Then, at 30°C under propylene flow, were charged in sequence with 75 ml of anhydrous hexane, 0.76 g of $AlEt_3$, the ester (c) reported in Table 1 ($AlEt_3$/ester molar ratio of 20) and 10 mg of solid catalyst component reported in Table 1. The autoclave was closed; subsequently the amount of hydrogen reported in Table 1 was added. Then, under stirring, 1.2 Kg of liquid propylene was fed. The temperature was raised to 70°C in five minutes and the polymerization was carried out at this temperature for two hours. At the end of the polymerization, the non-reacted propylene was removed; the polymer was recovered and dried at 70°C under vacuum for three hours. Then the polymer was weighed, analyzed and fractionated with o-xylene to determine the amount of the xylene insoluble (X.I.) fraction. Polymer analyses, as well as catalyst activity, are reported in Table 1.

**TABLE 1**

| Ex. | Catalyst component procedure | Ester | $H_2$ (NL) | Activity (Kg/g) | XI (%) | MIL g/10' | PI |
|---|---|---|---|---|---|---|---|
| 1 | A | DES | 2 | 58.2 | 98.0 | 7.1 | n.d. |
| 2 | A | DEG | 2 | 55.7 | 97.9 | 6.9 | n.d. |
| 3 | A | DEA | 2 | 59.1 | 98.0 | 6.8 | 3.5 |
| 4 | " | " | 5 | 64.8 | 98.3 | 57.1 | 3.2 |
| 5 | " | " | 15 | 49.9 | 97.3 | 662 | n.d. |
| 6 | A | DIA | 2 | 66.7 | 97.9 | 6.3 | 3.5 |
| 7 | " | " | 5 | 79.7 | 97.5 | 58.6 | 3.2 |
| 8 | " | " | 15 | 69.5 | 96.8 | 468 | n.d. |
| 9 | A | DEP | 2 | 61.5 | 98.4 | 7.8 | 3.3 |
| 10 | " | " | 5 | 61.1 | 98.1 | 63 | 3.3 |
| 11 | " | " | 15 | 49.4 | 97.1 | 810 | n.d. |
| 12 | A | DMP | 2 | 58.0 | 98.2 | 7.9 | 3.6 |
| 13 | " | " | 5 | 53.9 | 97.8 | 62.7 | 3.4 |
| 14 | " | " | 15 | 45.9 | 96.8 | 573 | n.d. |
| 15 | A | DESB | 2 | 57.4 | 98.2 | 6.4 | 3.0 |
| 16 | " | " | 5 | 56.5 | 98.1 | 52.6 | 3.5 |
| 17 | " | " | 15 | 46.4 | 97.0 | 540 | n.d. |
| 18 | B | DEP | 5 | 50.6 | 97.9 | 32.2 | 4.5 |
| 19 | " | " | 15 | 44.8 | 96.9 | 635 | n.d. |
| 20 | B | DESB | 5 | 51.7 | 97.7 | 46.8 | n.d. |
| 21 | " | " | 15 | 46.7 | 96.7 | 620 | n.d. |
| Comp.1 | A | DIPS | 2 | 85.0 | 98.5 | 1.5 | n.d. |
| Comp.2 | A | DEM | 2 | 88.0 | 96.0 | 8.5 | n.d. |
| Comp.3 | A | C | 2 | 63.8 | 98.3 | 4.0 | 3.5 |
| | " | " | 5 | 60.0 | 98.2 | 42.1 | 3.5 |
| | " | " | 15 | 51.4 | 97.4 | 431 | n.d. |

(continued)

| Ex. | Catalyst component procedure | Ester | $H_2$ (NL) | Activity (Kg/g) | XI (%) | MIL g/10' | PI |
|---|---|---|---|---|---|---|---|
| Comp.4 | B | C | 5 | 66.7 | 98.3 | 22.2 | n.d. |
| | " | " | 15 | 50.0 | 97.3 | 160 | n.d. |
| DES = Diethyl Succinate<br>DIPS = Diethyl 2,3-diisopropylsuccinate<br>DEG = Diethyl glutarate<br>DEA = Diethyl Adipate<br>DIA = Diisobutyl Adipate<br>DEP = Diethyl Pimelate<br>DMP = Dimethyl Pimelate<br>DESB = Diethyl Suberate<br>DEM = Diethyl Malonate<br>C = Cyclohexylmethyldimethoxy silane<br>n.d. = not determined | | | | | | | |

## Claims

1. A catalyst system comprising the product obtained by contacting

   (a) a solid catalyst component containing Mg, Ti, halogen and at least an electron donor compound selected from 1,3-diethers;
   (b) an alkylaluminum cocatalyst; and
   (c) an ester of formula $ROOC-(CH_2)_n-COOR$ in which n is an integer from 2 to 8, R groups, equal to or different from each other, are $C_1$-$C_{10}$ alkyl groups.

2. The catalyst system of claim 1 in which in the solid catalyst component (a) the electron donor is selected from 1,3-diethers of formula (I):

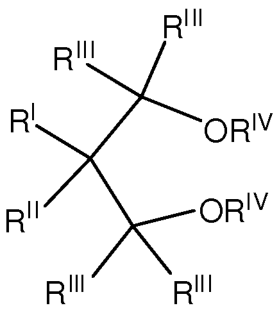

(I)

   where $R^I$ and $R^{II}$ are the same or different and are hydrogen or linear or branched $C_1$-$C_{18}$ hydrocarbon groups which can also form one or more cyclic structures; $R^{III}$ groups, equal or different from each other, are hydrogen or $C_1$-$C_{18}$ hydrocarbon groups; $R^{IV}$ groups equal or different from each other, have the same meaning of $R^{III}$ except that they cannot be hydrogen; each of $R^I$ to $R^{IV}$ groups can contain heteroatoms selected from halogens, N, O, S and Si.

3. The catalyst according to claim 1 in which ester (c) is selected from the compounds in which R is a $C_1$-$C_6$ linear or branched alkyl.

4. The catalyst according to claim 3 in which R is ethyl or isobutyl.

5. The catalyst according to claim 1 in which in the ester (c) n is from 4 to 7.

6. The catalyst according to claim 1 in which in the ester (c) n is from 4 to 6.

**7.** The catalyst according to claim 1 in which in which in the solid catalyst component (a) the electron donor is selected from 1,3-diethers of formula (III):

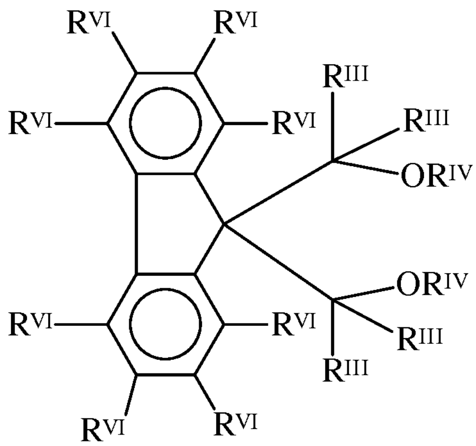

(III)

where the radicals $R^{III}$ and $R^{IV}$ have the same meaning defined in claim 2 and the $R^{VI}$ radicals, equal to or different from each other are hydrogen; halogens, $C_1$-$C_{20}$ alkyl radicals, $C_3$-$C_{20}$ cycloalkyl, $C_6$-$C_{20}$ aryl, $C_7$-$C_{20}$ alkylaryl and $C_7$-$C_{20}$ arylalkyl radicals, optionally containing one or more heteroatoms selected from the group consisting of N, 0, S, P, Si and halogens.

**8.** The catalyst according to claim 1 in which the solid catalyst component (a) additionally comprises electron donors belonging to ethers, esters of aromatic or aliphatic mono or dicarboxylic acids, ketones, or alkoxyesters.

**9.** Process for the polymerization of olefins carried out in the presence of hydrogen and of a catalyst system according to claim 1.

**10.** The process according to claim 9 in which the olefin is propylene.

**Patentansprüche**

**1.** Katalysatorsystem, welches das Produkt umfasst, das erhalten wird durch Kontaktieren von

(a) einer festen Katalysatorkomponente, die Mg, Ti, Halogen und mindestens eine Elektronendonorverbindung enthält, die ausgewählt ist aus 1,3-Diethern;
(b) einem Alkylaluminiumcokatalysator und
(c) einem Ester mit der Formel ROOC-$(CH_2)_n$-COOR, worin n eine ganze Zahl von 2 bis 8 ist, die Gruppen R, die gleich oder voneinander verschieden sind, $C_1$-$C_{10}$-Alkylgruppen sind.

**2.** Katalysatorsystem nach Anspruch 1, wobei der Elektronendonor in der festen Katalysatorkomponente (a) ausgewählt ist aus 1,3-Diethern mit der Formel (I):

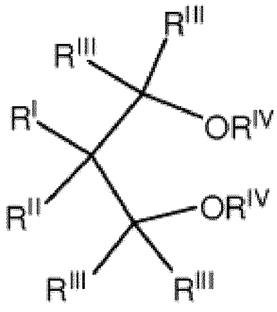

(I)

wobei $R^I$ und $R^{II}$ gleich oder verschieden sind und Wasserstoff oder lineare oder verzweigte $C_1$-$C_{18}$-Kohlenwasserstoffgruppen sind, die auch eine oder mehrere cyclische Strukturen bilden können; Gruppen $R^{III}$, die gleich oder voneinander verschieden sind, Wasserstoff oder $C_1$-$C_{18}$-Kohlenwasserstoffgruppen sind; Gruppen $R^{IV}$, die gleich oder voneinander verschieden sind, die gleiche Bedeutung wie $R^{III}$ haben, außer dass sie nicht Wasserstoff sein können; jeder der Gruppen von $R^I$ bis $R^{IV}$ Heteroatome ausgewählt aus Halogenen, N, O, S und Si enthalten kann.

**3.** Katalysator nach Anspruch 1, wobei Ester (c) ausgewählt ist aus den Verbindungen, in denen R ein lineares oder verzweigtes $C_1$-$C_6$-Alkyl ist.

**4.** Katalysator nach Anspruch 3, wobei R Ethyl oder Isobutyl ist.

**5.** Katalysator nach Anspruch 4, wobei n in dem Ester (c) von 4 bis 7 ist.

**6.** Katalysator nach Anspruch 4, wobei n in dem Ester (c) von 4 bis 6 ist.

**7.** Katalysator nach Anspruch 1, wobei der Elektronendonor in der festen Katalysatorkomponente (a) ausgewählt ist aus 1,3-Diethern mit der Formel (III):

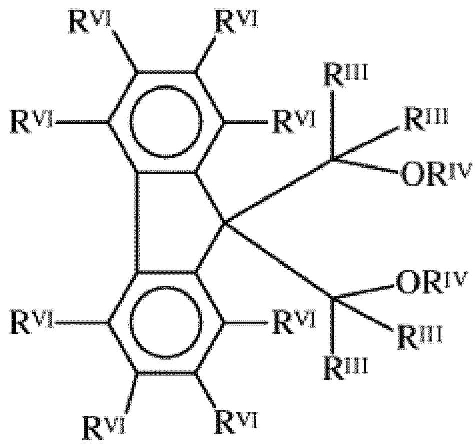

(III)

wobei die Reste $R^{III}$ und $R^{IV}$ die in Anspruch 2 definierte Bedeutung haben, und die Reste $R^{VI}$, die gleich oder voneinander verschieden sind, Wasserstoff; Halogene, $C_1$-$C_{20}$-Alkylreste, $C_3$-$C_{20}$-Cycloalkyl-, $C_6$-$C_{20}$-Aryl-, $C_7$-$C_{20}$-Alkylaryl- und $C_7$-$C_{20}$-Arylalkylreste sind, die gegebenenfalls ein oder mehrere Heteroatome ausgewählt aus der Gruppe bestehend aus N, O, S, P, Si und Halogenen enthalten.

**8.** Katalysator nach Anspruch 1, wobei die feste Katalysatorkomponente (a) zusätzlich Elektronendonoren umfasst, die zu Ethern, Estern von aromatischen oder aliphatischen Mono- oder Dicarbonsäuren, Ketonen oder Alkoxyestern gehören.

**9.** Verfahren zur Polymerisation von Olefinen, das in Anwesenheit von Wasserstoff und einem Katalysatorsystem gemäß Anspruch 1 durchgeführt wird.

**10.** Verfahren nach Anspruch 9, wobei das Olefin Propylen ist.

## Revendications

**1.** Système catalytique comprenant le produit obtenu par mise en contact de

(a) un composant catalyseur solide contenant Mg, Ti, un halogène et au moins un composé donneur d'électrons choisi parmi les 1,3-diéthers ;
(b) un cocatalyseur d'alkylaluminium ; et
(c) un ester de formule $ROOC-(CH_2)_n-COOR$ dans laquelle n est un nombre entier allant de 2 à 8, les groupes R, identiques ou différents les uns des autres, sont des groupes alkyle en Ci-Cio.

**2.** Système catalytique selon la revendication 1 dans lequel, dans le composant catalyseur solide (a), le donneur d'électrons est choisi parmi les 1,3-diéthers de formule (I) :

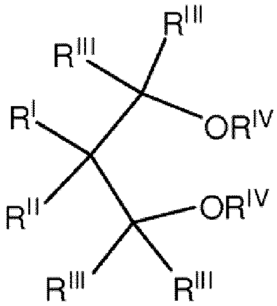
(I)

où $R^I$ et $R^{II}$ sont identiques ou différents et sont un hydrogène ou des groupes hydrocarbonés en $C_1$-$C_{18}$ linéaires ou ramifiés qui peuvent également former une ou plusieurs structures cycliques ; les groupes $R^{III}$, identiques ou différents les uns des autres, sont un hydrogène ou des groupes hydrocarbonés en $C_1$-$C_{18}$ ; les groupes $R^{IV}$, identiques ou différents les uns des autres, ont la même signification que $R^{III}$ sauf qu'ils ne peuvent pas être un hydrogène ; chacun des groupes $R^I$ à $R^{IV}$ peut contenir des hétéroatomes choisis parmi les halogènes, N, O, S et Si.

**3.** Catalyseur selon la revendication 1 dans lequel l'ester (c) est choisi parmi les composés dans lesquels R est un alkyle linéaire ou ramifié en $C_1$-$C_6$.

**4.** Catalyseur selon la revendication 3 dans lequel R est éthyle ou isobutyle.

**5.** Catalyseur selon la revendication 1 dans lequel, dans l'ester (c), n va de 4 à 7.

**6.** Catalyseur selon la revendication 1 dans lequel, dans l'ester (c), n va de 4 à 6.

**7.** Catalyseur selon la revendication 1 dans lequel, dans le composant catalyseur solide (a), le donneur d'électrons est choisi parmi les 1,3-diéthers de formule (III) :

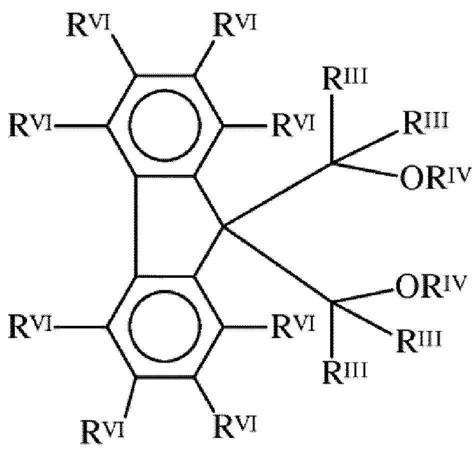

(III)

où les radicaux $R^{III}$ et $R^{IV}$ ont la même signification que celle définie dans la revendication 2 et les radicaux $R^{IV}$, identiques ou différents les uns des autres, sont un hydrogène ; des halogènes, des radicaux alkyle en $C_1$-$C_{20}$, des radicaux cycloalkyle en $C_3$-$C_{20}$, aryle en $C_6$-$C_{20}$, alkylaryle en $C_7$-$C_{20}$ et arylalkyle en $C_7$-$C_{20}$, contenant éventuellement un ou plusieurs hétéroatomes choisis dans le groupe constitué par N, O, S, P, Si et les halogènes.

**8.** Catalyseur selon la revendication 1 dans lequel le composant catalyseur solide (a) comprend en outre des donneurs d'électrons appartenant à des éthers, des esters d'acides mono ou dicarboxyliques aromatiques ou aliphatiques, des cétones ou des alcoxyesters.

**9.** Procédé de polymérisation d'oléfines mis en oeuvre en présence d'hydrogène et d'un système catalytique selon la revendication 1.

**10.** Procédé selon la revendication 9 dans lequel l'oléfine est le propylène.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 622380 A
- EP 1088009 A
- US 4298718 A
- US 4495338 A
- WO 2005095472 A
- US 4399054 A
- US 4469648 A
- EP 395083 A
- EP 553805 A
- EP 553806 A
- EP 601525 A
- WO 9844001 A
- WO 9844009 A